(19)

Europäisches
Patentamt
European
Patent Office
Office européen
des brevets

(11) **EP 4 546 255 A1**

(12) **EUROPEAN PATENT APPLICATION**

(43) Date of publication:
**30.04.2025 Bulletin 2025/18**

(21) Application number: **23306860.0**

(22) Date of filing: **24.10.2023**

(51) International Patent Classification (IPC):
***G06T 7/00*** *(2017.01)*　　***G06T 7/11*** *(2017.01)*

(52) Cooperative Patent Classification (CPC):
**G06T 7/0012; G06T 7/11;** G06T 2207/10072;
G06T 2207/20081; G06T 2207/20084;
G06T 2207/30016; G06T 2207/30061;
G06T 2207/30068

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **TheraPanacea**
**75004 Paris (FR)**

(72) Inventors:
• **SCHMIDT-MENGIN, Marius**
**31000 Toulouse (FR)**
• **BENICHOUX, Alexis**
**75010 Paris (FR)**

(74) Representative: **Icosa**
**83 avenue Denfert-Rochereau**
**75014 Paris (FR)**

(54) **DEVICE AND METHOD FOR DETECTING AND SEGMENTING AT LEAST ONE REGION OF INTEREST IN A 3D IMAGE**

(57) The present invention relates to a device and a method for training a machine learning model for detecting the presence of at least one region of interest in a 3D image of a subject. The present invention further relates to a device and a method for detecting and reconstructing at least one region of interest in a 3D image of a subject using a trained machine learning model obtained with the method and device for training.

**FIG. 1**

**Description**

**FIELD OF INVENTION**

The present invention relates to the field of image processing of medical images. The present invention notably relates to training and use of machine learning model for identification of region of interest into medical images of patients.

**BACKGROUND OF INVENTION**

3D medical images, such as MRI, CT-scans or PET-scans provide information about the internal structures of the human body and have revolutionized clinical practice by enabling comprehensive visualization and analysis of anatomical structures. However, the interpretation of 3D medical image volumes poses significant challenges, particularly in detecting differences between the images. Comparing a patient image data with a healthy group can help detect and define tissue abnormalities, such as lesions caused by cancer, or infection. Comparing images between cohorts of labelled patients can also help understand the evolution of imaging biomarkers with respect to observable variables (e.g., genre, age, disease progression, treatment response).

Detecting discriminative biomarkers between two patient cohorts can be seen as a particular case of weakly supervised object localization problem. Anomaly detection approaches model the distribution of healthy images with representation learning, and detect anomalies as outliers. Successful approaches include generative adversarial networks like AnoGAN, autoencoders, and feature autoencoders. Anomaly detection methods do not require normal versus abnormal labels since they are able to identify out-of-distribution samples, and are also used in a fully unsupervised set up, such as the Medical out-of-distribution analysis challenge. Weakly supervised object localization methods based on explainability of classifiers have been reported in medical imaging for example in the case of diabetic retinopathy lesions in retinal fundus images, tumor lesions in PET, and melanoma in MRI. Typical approaches use a saliency detection method to produce region of interests and post process the results with domain specific knowledge to increase detection accuracy. Explainability methods include SHAP, Score-CAM and Grad-CAM for general classifiers and Response-CAM in the specific case of volumetric 3d classifiers.

Therefore, to summarize, nowadays multiple methods are proposed allowing to train medical image classifiers to high accuracies, but the lack of a visual explanation of the classifier's decision remains problematic for human interpretation. One alternative is to train segmentation models, but they require much higher labelling efforts. Furthermore, segmentation masks can be unknown to humans, for example when the target ground truth label does not stem from the images themselves, but rather from a clinical or biological variable. The present invention provides a novel method which advantageously overcomes the prior art drawbacks allowing to not only correctly classify images but also provide the necessary information for human interpretability.

**SUMMARY**

This invention thus relates to a device for training a machine learning model for detecting the presence of at least one region of interest in a 3D image of a subject; said device comprising:

- at least one input configured to receive a first set of 3D images acquired from a first cohort of subject and a second set of 3D images acquired from a second cohort of subject, wherein the 3D images of said first set differs from the 3D images of said second set for the presence of said at least one region of interest;
- at least one processor configured to:

  - for each received 3D image of the first cohort and the second cohort, generate at least two stacks of 2D slices, so that the orientation of the slices in each stack is different from the orientation of the slices in another stack of said at least two stacks;
  - generate a training dataset comprising said stacks of 2D slices;
  - train said machine learning model using said generated training dataset so to obtain training parameters, said machine learning model being configured to receive as input a 2D slice and provide as output a slice-level prediction score representing a probability that said input 2D slice comprises at least one region of interest, said slice-level prediction score being used to compute and optimize a loss function during said training so to optimize the discrimination between the 2D slices comprising said at least one region from the 2D slices comprising no region of interest;

- at least one output configured to provide said training parameters for the trained machine learning model.

According to one embodiment, the trained machine learning model is configured to detect, in one input 3D image of a subject, the presence of at least one region of interest associated to the first cohort (i.e., 3D images of the first cohort comprises region(s) of interest which are absent from 3D images of the second cohort).

Advantageously, the present inventio allows to obtain a trained machine learning model (i.e., obtain fine-tuned and optimized training parameters) capable of detect the presence of one or more region(s) of interest in one input 3D image of a subject at the slice-level.

According to one embodiment, the region of interest is a lesion present in the subjects of the first cohort and absent in the subjects of the second cohort (e.g., healthy patients). For the trained machine learning model to detect the possible presence of one or more regions of interest in one input image, said inputted 3D image of the patient should belong as well to the first cohort. In other words, if the first cohort comprises patients with breast cancer, then the trained machine learning model can detect the presence of at least one region of interest in a 3D image of one subject affected by breast cancer. Indeed, a region of interest being a metastasis in the liver would not be detected from a trained machine learning model wherein the first cohort comprises breast cancer patients.

According to one embodiment, the machine learning model is a 2D deep neural network, preferably without batch normalization layers.

According to one embodiment, the operation of generating the training dataset comprises generating a plurality of training samples, each training sample comprising a stack of 2D slices and at least one label (i.e., each 2D slice of the stack is associated to said label), said label representing an absence or a present of at least one region of interest in the 3D image from which the stack of 2D slices is obtained. In this embodiment, the training is a weakly supervised training.

The present invention also relates to computer-implemented method for training a machine learning model for detecting the presence of at least one region of interest in a 3D image of a subject; said method comprising:

- receive a first set of 3D images acquired from a first cohort of subject and a second set of 3D images acquired from a second cohort of subject, wherein the 3D images of said first set differs from the 3D images of said second set for the presence of said at least one region of interest;
- for each received 3D image of the first cohort and the second cohort, generate at least two stacks of 2D slices, so that the orientation of the slices in each stack is different from the orientation of the slices in another stack of said at least two stacks;
- generate a training dataset comprising said stacks of 2D slices;
- train said machine learning model using said generated training dataset so to obtain training parameters, said machine learning model being configured to receive as input a 2D slice and provide as output a slice-level prediction score representing a probability that said input 2D slice comprises at least one region of interest, said slice-level prediction score being used to compute and optimize a loss function during said training so to optimize the discrimination between the 2D slices comprising said at least one region from the 2D slices comprising no region of interest;
- at least one output configured to provide said training parameters for the trained machine learning model.

The present invention further relates to a device for detecting and reconstructing at least one region of interest in a 3D image of a subject using a trained machine learning model obtained with the method for training of the present invention; wherein said device comprises:

- at least one input configured to receive a 3D image of a subject;
- at least one processor configured to:

   ○ obtain a plurality of stacks of 2D slices from said 3D image, wherein the orientation of the 2D slices in one stack is different from the orientation of the 2D slices in another stack of the plurality of stacks;
   o for each obtained stack:

   • feed each 2D slice into said trained machine learning model for detecting at least one region of interest in the 3D image of the subject, obtaining slice-level prediction scores for each 2D slice; wherein the slice-level prediction score represents a probability that said input 2D slice comprises at least one portion of said region of interest,
   • calculate the second derivative of the slice-level prediction scores along the orientation axis of the stack;

   ○ for each orientation of the plurality of stacks and 2D slice, perform backprojection using said calculated second derivative and generate a tomographic reconstruction of the at least one region of interest,

- at least one output providing said tomographic reconstruction of at least one region of interest present in a 3D image of a subject.

Advantageously, the use of the trained machine learning model, combined with its application on multiple randomly oriented 2D stacks of the same input image, provide an information on the localization of the at least one region of interest in the image that its then extract thanks to the inverse Radom transformation (i.e., backprojection).

According to one embodiment, the at least one processor is further configured to apply a threshold on the tomographic reconstruction to obtain a segmentation of the at least one region of interest.

According to one embodiment, the at least one processor is further configured to calculate a volume-level score by taking the maximum over the slice-level scores calculated for each stack. Advantageously, this volume-level score can be output with the segmented volume of the region of interest to the user to help in the diagnostic of the subject.

The present disclosure further pertains to computer-implemented method for detecting and reconstructing at least one region of interest in a 3D image of a subject using a trained machine learning model obtained with the method for training of the present invention; wherein said method comprises:

- receiving a 3D image of a subject;
- obtain a plurality of stacks of 2D slices from said 3D image, wherein the orientation of the 2D slices in one stack is different from the orientation of the 2D slices in another stack of the plurality of stacks;
- for each obtained stack:

  • feed each 2D slice into said trained machine learning model for detecting at least one region of interest in the 3D image of the subject, obtaining slice-level prediction scores for each 2D slice; wherein the slice-level prediction score represents a probability that said input 2D slice comprises at least one portion of said region of interest,
  • calculate the second derivative of the slice-level prediction scores along the orientation axis of the stack;

- for each orientation of the plurality of stacks and 2D slice, perform backprojection using said calculated second derivative and generate a tomographic reconstruction of the at least one region of interest,
- at least one output providing said tomographic reconstruction of at least one region of interest present in a 3D image of a subject.

The present disclosure further pertains to a computer program product comprising instructions which, when the program is executed by a computer, cause the computer to carry out the method for training and the method for detecting and reconstructing, compliant with the present disclosure.

The present disclosure further pertains to a non-transitory program storage device, readable by a computer, tangibly embodying a program of instructions executable by the computer to perform a method for detection and reconstructing or a method for training, compliant with the present disclosure.

Such a non-transitory program storage device can be, without limitation, an electronic, magnetic, optical, electromagnetic, infrared, or semiconductor device, or any suitable combination of the foregoing. It is to be appreciated that the following, while providing more specific examples, is merely an illustrative and not exhaustive listing as readily appreciated by one of ordinary skill in the art: a portable computer diskette, a hard disk, a ROM, an EPROM (Erasable Programmable ROM) or a Flash memory, a portable CD-ROM (Compact-Disc ROM).

**DEFINITIONS**

In the present invention, the following terms have the following meanings:

The terms **"adapted"** and **"configured"** are used in the present disclosure as broadly encompassing initial configuration, later adaptation or complementation of the present device, or any combination thereof alike, whether effected through material or software means (including firmware).

A **"cohort"** is a group of individuals who share a common characteristic, notably a common disease, or experience within a particular time frame. Cohorts allows to study and analyze groups of people or entities with similar attributes or experiences for the purpose of understanding trends, behaviors, or outcomes.

The term **"processor"** should not be construed to be restricted to hardware capable of executing software, and refers in a general way to a processing device, which can for example include a computer, a microprocessor, an integrated circuit, or a programmable logic device (PLD). The processor may also encompass one or more Graphics Processing Units (GPU), whether exploited for computer graphics and image processing or other functions. Additionally, the instructions and/or data enabling to perform associated and/or resulting functionalities may be stored on any processsorreadable medium such as, e.g., an integrated circuit, a hard disk, a CD (Compact Disc), an optical disc such as a DVD (Digital Versatile Disc), a RAM (Random-Access Memory) or a ROM (Read-Only Memory). Instructions may be notably stored in hardware, software, firmware or in any combination thereof.

**"Machine learning (ML)"** designates in a traditional way computer algorithms improving automatically through experience, on the ground of training data enabling to adjust parameters of computer models through gap reductions between expected outputs extracted from the training data and evaluated outputs computed by the computer models.

A **"hyper-parameter"** presently means a parameter used to carry out an upstream control of a model construction, such as a remembering-forgetting balance in sample selection or a width of a time window, by contrast with a parameter of a model itself, which depends on specific situations. In ML applications, hyper-parameters are used to control the learning process.

**"Datasets"** are collections of data used to build an ML mathematical model, so as to make data-driven predictions or decisions. In **"supervised learning"** (i.e. inferring functions from known input-output examples in the form of labelled training data), three types of ML datasets (also designated as ML sets) are typically dedicated to three respective kinds of tasks: **"training",** i.e. fitting the parameters, **"validation",** i.e. tuning ML hyperparameters (which are parameters used to control the learning process), and **"testing",** i.e. checking independently of a training dataset exploited for building a mathematical model that the latter model provides satisfying results.

A **"neural network (NN)"** designates a category of ML comprising nodes (called **"neurons"**), and connections between neurons modeled by **"weights".** For each neuron, an output is given in function of an input or a set of inputs by an **"activation function".** Neurons are generally organized into multiple **"layers",** so that neurons of one layer connect only to neurons of the immediately preceding and immediately following layers.

The above ML definitions are compliant with their usual meaning, and can be completed with numerous associated features and properties, and definitions of related numerical objects, well known to a person skilled in the ML field. Additional terms will be defined, specified or commented wherever useful throughout the following description.

## BRIEF DESCRIPTION OF THE DRAWINGS

The present disclosure will be better understood, and other specific features and advantages will emerge upon reading the following description of particular and non-restrictive illustrative embodiments, the description making reference to the annexed drawings wherein:

**Figure 1** is a block diagram representing schematically a particular mode of a system for training machine learning model for detecting the presence of at least one region of interest in a 3D image of a subject, compliant with the present disclosure.

**Figure 2** is a flow chart showing successive steps executed with the device for training of figure 1.

**Figure 3** is a block diagram representing schematically a particular mode of a system for detecting and reconstructing at least one region of interest in a 3D image of a subject using a trained machine learning model obtained with the system of Figure 1, compliant with the present disclosure.

**Figure 4** is a flow chart showing successive steps executed with the device for detection and reconstruction of a ROI of figure 3.

**Figure 5** shows an apparatus integrating the functions of the device for training of figure 1 and of the device for detecting/reconstructing of figure 3.

**Figure 6** shows an example of implementation of the present method in the case of gadolinium-enhancing classification reconstruction. Notably from the bottom to the top: an MRI T1 image post gadolinium injection comprising multiple sclerosis gadolinium enhancing lesions, the corresponding heatmap obtained using the method of the present invention and a representation of the segmented tomographic reconstructed of the multiple sclerosis gadolinium enhancing lesions.

**Figure 7** shows an example of implementation of the present method in the case of tumors. Notably from the bottom to the top: a CT/PET scanner image of a patient having a tumor, the corresponding heatmap obtained using the method of the present invention and a representation of the segmented tomographic reconstructed of the tumor.

**Figures 8** shows an example of implementation of the present method in the case of patient who had COVID. Notably from the bottom to the top: a CT scanner image of the patient who had COVID, the corresponding heatmap obtained using the method of the present invention and a representation of the segmented tomographic reconstructed of the lesion caused by COVID.

**Figures 9** shows an example of implementation of the present method in the case of patient with breast cancer. Notably from the bottom to the top: an MRI scanner image of the patient with breast cancer, the corresponding heatmap obtained using the method of the present invention and a representation of the segmented tomographic reconstructed of the breast cancer.

**Figures 10** shows histograms for 100,000 slices of the MosMed dataset (validation set) for positive and negative volumes.

**Figures 11** shows logits produced by the trained classifier for each slice of the volume shown in the background (Duke breast cancer MRI dataset), along the vertical and horizontal axis. These profiles allow to pinpoint the location of the tumour.

## ILLUSTRATIVE EMBODIMENTS

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein may represent conceptual views of illustrative circuitry embodying the principles of the disclosure. Similarly, it will be appreciated that any flow charts, flow diagrams, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, a single shared processor, or a plurality of individual processors, some of which may be shared.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces.

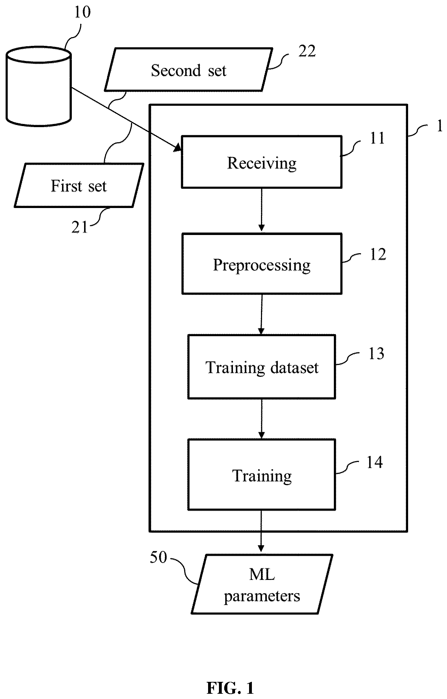

The present disclosure will be described in reference to a particular functional embodiment of a device 1 for training a machine learning model for detecting the presence of at least one region of interest (ROI) in a 3D image of a subject, as illustrated on **Figure 1.**

The device 1 is adapted to provide a set of training parameters 50 for the trained machine learning model.

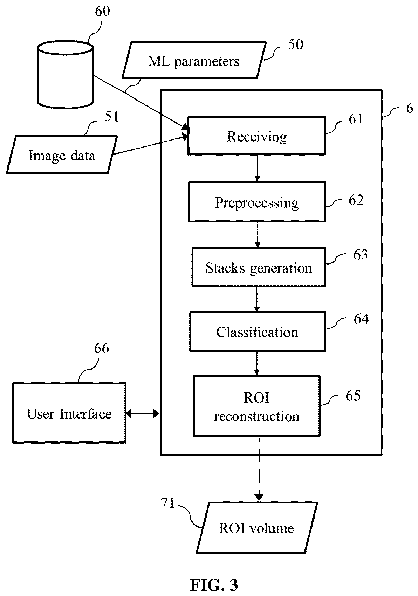

The device 1 for training, suited to set model parameters, is then associated to a device 6 for detecting the presence and reconstructing at least one region of interest in a 3D image of a new subject, represented on **Figure 3,** which will be subsequently described.

Though the presently described devices 1 and 6 are versatile and provided with several functions that can be carried out alternatively or in any cumulative way, other implementations within the scope of the present disclosure include devices having only parts of the present functionalities.

Each of the devices 1 and 6 is advantageously an apparatus, or a physical part of an apparatus, designed, configured and/or adapted for performing the mentioned functions and produce the mentioned effects or results. In alternative implementations, any of the device 1 and the device 6 is embodied as a set of apparatus or physical parts of apparatus, whether grouped in a same machine or in different, possibly remote, machines. The device 1 and/or the device 6 may e.g., have functions distributed over a cloud infrastructure and be available to users as a cloud-based service, or have remote functions accessible through an API.

The device 1 for detecting/reconstructing and the device 6 for training may be integrated in a same apparatus or set of apparatus, and intended to same users. In other implementations, the structure of device 6 may be completely independent of the structure of device 1, and may be provided for other users. For example, the device 1 may have a parameterized model available to operators for lesions identification, wholly set from previous training effected upstream by other players with the device 6.

In what follows, the modules are to be understood as functional entities rather than material, physically distinct, components. They can consequently be embodied either as grouped together in a same tangible and concrete component, or distributed into several such components. Also, each of those modules is possibly itself shared between at least two physical components. In addition, the modules are implemented in hardware, software, firmware, or any mixed form thereof as well. They are preferably embodied within at least one processor of the device 1 or of the device 6.

The device 1 for training comprises a module 11 for receiving 3D images of a plurality of subjects (21,22) stored in one or more local or remote database(s) 10. The latter can take the form of storage resources available from any kind of appropriate storage means, which can be notably a RAM or an EEPROM (Electrically-Erasable Programmable Read-Only Memory) such as a Flash memory, possibly within an SSD (Solid-State Disk).

The received 3D images comprise notably a first set of 3D images acquired from a first cohort of subject 21 and a second set of 3D images acquired from a second cohort of subject 22. Advantageously for the training of the machine learning model, the 3D images of said first set 21 differs from the 3D images of said second set 22 for the presence in each image of said at least one region of interest. The region of interest may be a lesion present in the subjects of the first cohort and absent in the subjects of the second cohort (or the opposite). For example, the second cohort comprises healthy subjects while the first cohort comprises patients who received a diagnosis of one of the following diseases: multiple sclerosis, covid, gadolinium-enhancing lesions, cancer, etc. It has to be noticed that any disease causing an anatomical or functional modification in the patient that is visually captured by a 3D imaging technique could be included in the present list.

The 3D images (21,22) comprise a representation of at least one portion of the patient that may have been previously acquired with a CT scanner, PET scanner or an MRI technique.

According to one embodiment associated to a supervised learning approach, each 3D image (i.e., image data) of the first 21 and second set 22 is associated to a label representing an absence or a present of a region of interest in the 3D image from which the stack of 2D slices is obtained. For example, the 3D images of healthy subjects are associated to the label 0, representing the absence of lesions, while the 3D images of patients are associated to the label 1.

The device 1 further comprises optionally a module 12 for preprocessing the received image data (21, 22). The module 12 may notably be adapted to standardize the received image data (21, 22) for sake of efficient and reliable processing. It may transform the image data (21, 22), e.g., by image resampling, intensity normalization, noise reduction, artifact removal and the like. According to various configurations, the module 12 is adapted to execute only part or all of the above functions, in any possible combination, in any manner suited to the following processing stage.

In advantageous modes, the module 12 is configured for preprocessing the image data (21, 22) so as to have the 3D images standardized. This may enhance the efficiency of the downstream processing by the device 6. Such a standardization may be particularly useful when exploited images originate from different sources, including possibly different imaging systems.

The standardization is advantageously applied to the 3D images for constructing the training dataset (21, 22) and the image data 51 (e.g., by the device 6) in a similar way. Notably, the device 6 may deal with image data 51 coming from a given sort of source, while its parameters result from a training based on image data (21, 22) obtained with different types of sources. Thanks to standardization, differences between sources may then be neutralized or minimized. This may make the device 1 more efficient and reliable.

The device 1 comprises a module 13 configured to construct the training dataset to be used for the training of the machine learning model. First, each 3D image of the first cohort 21 and the second cohort 22 is processed to generate at least two stacks of 2D slices. The stacks from each 3D image are generated so that the orientation of the slices in each stack is different from the orientation of the slices in another at least one stack. In one example, the normal vectors of the 2D slices can be anywhere on the unit sphere and may be randomly selected. The training dataset is therefore generated as comprising said stakes of 2D slices. According to one embodiment associated to a (weakly) supervised learning approach, each stack is assigned to the label associated to the 3D image from which it has been obtained. In this way the training dataset comprises a plurality of training samples, each training sample comprising one stack and the associated label. In one alternative embodiment associated to self-supervised learning, no labelling of the training dataset samples is performed. Advantageously, this construction of the training dataset allows the ML model to learn directly from the data (i.e., 3D image) the features of the regions of interest in the "disease" cohort and not from a manual annotation of an operator. In this way, the trained ML model may detect regions of interest (as differentiating the two cohorts) that may have been unknown from the operator (e.g., experimented radiologist). This is an extremely valuable feature of the present ML model, notably when wanting to analyze new disease, such as COVID, for which the nature of the lesions is still not "well" known. Furthermore, the present ML model is not a "black box", as it will be described below with the method/device for detection and reconstruction, explicability of the ML model results is obtained thanks to the reconstruction of the region of interest.

The device 1 comprises a module 14 for training the machine learning (ML) model using said generated training dataset so to obtain training parameters. This module 14 is configured to form batches by extracting multiple slices from multiple volumes and optimize the model to minimize the loss function. The (ML) model is configured and trained so to produce higher slice-level prediction scores for slices that contain anomalies. For example, on a cancer dataset (i.e., second set comprising cancer patient images), the slice-level prediction score that is produced by the ML model for a slice containing a tumor will be higher than for a slice that contains only healthy tissue. Thus advantageously, by extracting multiple slices from a given input volume and obtaining their predictions using the trained ML model, it is possible to obtain spatial information about the locations of the anomalies (i.e., region(s) of interest). More in details, when feeding each slice of a given volume to the classifier (i.e., trained ML model), a logit profile along the slice axis is obtained that can allow to pinpoint the location of the discriminative regions (for example tumors) along this axis. If this process is repeated for different slice axes, it is possible to narrow down the location of the ROI in three dimensions. This process is called tomographic reconstruction, and its principal mathematical tool is the Radon transform. This idea is formalized by the Radon transform in the device 6 for detecting and reconstructing, that will be described in details below.

More in details, the architecture of the ML model is configured to receive as input one 2D slice and provide as output a slice-level prediction score representing a probability that said input 2D slice comprises at least one region of interest. This operation may be parallelized; according to one example all the 2D slices of a given 3D image are put in a batch and processed in parallel. The architecture of said ML model may be a neural network, notably a 2D deep neural network, specifically referred to as 2D Convolutional Neural Network (CNN), which is a type of neural network architecture designed for processing two-dimensional grid-like data, such as images. In one example, the 2D deep neural network may be a ResNet, a ResNet-10-T or a ResNet-50 with group normalization or the like.

In one example, the 2D deep neural network does not comprise batch normalization layers. Advantageously, the Applicant has remarked that training the 2D deep neural network provides better performances without batch normalization than with batch normalization. Indeed, batch normalization breaks the independence between samples within a batch, leading to "cheating" in finding a low-loss solution.

According to one embodiment associated to a supervised learning approach, the performed training is a weakly supervised training wherein a binary cross-entropy loss is minimized with stochastic gradient descent, or alternatively with an Adam optimizer or any other optimizer known by the person skilled in the art. The training is notably weakly supervised as the training dataset only includes information on the presence or absence of a region of interest (i.e., lesion) evaluated on the whole image and not on the 2D slice level. Indeed, in this way the ML model is trained on imprecisely labeled data, as opposed to the traditional supervised learning approach where each training example is associated with a precise label. Advantageously, the weakly supervised training allows the machine learning model to learn features or patterns from the training dataset that may not have been explicitly known or labeled beforehand.

It may be observed that the operations by the modules 11, 12 and 13 are not necessarily successive in time, and may overlap, proceed in parallel or alternate, in any appropriate manner.

The device 1 further comprises an output module 14 for outputting the training parameters.

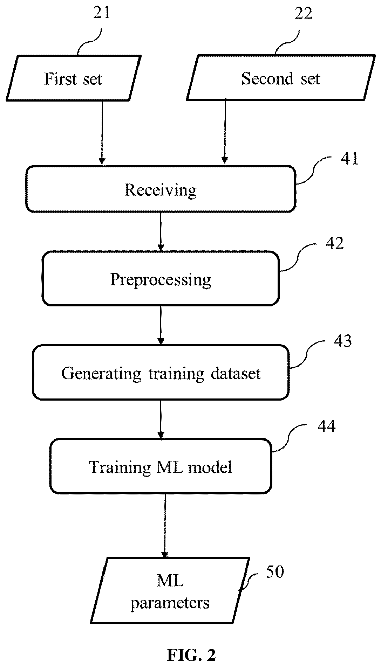

In its automatic actions, the device 1 may for example execute the following process **(Figure 2)**:

- receiving the image data 21 and 22 (step 41),
- preprocessing the image data 21 and 22 (step 42),
- generating the training dataset using the preprocessed image data 21 and 22 (step 43),
- training the machine learning model using said generated training dataset so to obtain training parameters (step 44).

The present disclosure will be further described in reference to a particular functional embodiment of a device 6 for detecting the presence of a volume of interest in a 3D image of a subject and reconstructing it, as illustrated on **Figure 3.**

The device 6 is adapted to produce a tomographic reconstruction of at least one region of interest present in a 3D image of a subject and optionally a volume-level score providing an information of the presence or absence of at least one region of interest in the 3D image.

The device 6 comprises a module 61 for receiving the 3D image of the subject 51, as well as ML (machine learning) parameters 50 stored in one or more local or remote database(s) 60. The latter can take the form of storage resources available from any kind of appropriate storage means, which can be notably a RAM or an EEPROM (Electrically-Erasable Programmable Read-Only Memory) such as a Flash memory, possibly within an SSD (Solid-State Disk). In advantageous embodiments, the ML parameters 50 have been previously generated by a system including the device 1 for training. Alternatively, the ML parameters 50 are received from a communication network.

The device 6 comprises a preprocessing module 62 and an image processing module 63 configured to generate a plurality of stacks of 2D slices from said 3D image 51. The stacks are generated so that the orientation of the 2D slices in one stack is different from the orientation of the 2D slices in another stack of the plurality of stacks. The orientations of the stacks' slices may be selected randomly.

Those modules 61, 62 and 63 will not be detailed here, since their description is similar to the description above of the respective modules 11, 12 and 13 of the device 1 for training. In particular, a same image standardization may be applied (modules 12 and 62).

The device 6 comprises a slice classification module 64 configured to implement the trained machine learning model using the ML parameters 50 obtained from device for training 1. In module 64, the 2D slices of each of the stacks are fed into said trained machine learning model so as to obtain an associated slice-level prediction score for each 2D slice representative of the presence (i.e., detection) of at least one region of interest in the 3D image of the subject. Notably, the slice-level prediction score represents a probability that said input 2D slice comprises at least one portion of said region of interest. The classification module may be further configured to calculate a volume-level score by taking the maximum over the slice-level scores calculated for each stack. In order to generate a unique global value representative of the presence of at least one region of interest in one 3D image 51 (i.e., provide a global and robust information on one subject), the module 64 may further calculate a global volume score as the mean over the volume-level scores of the stacks.

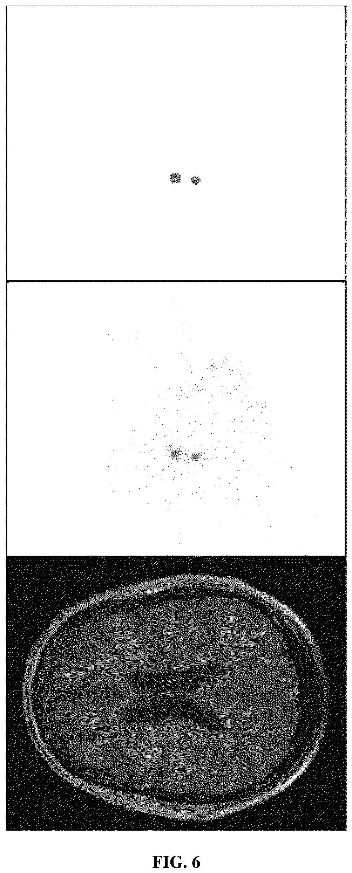

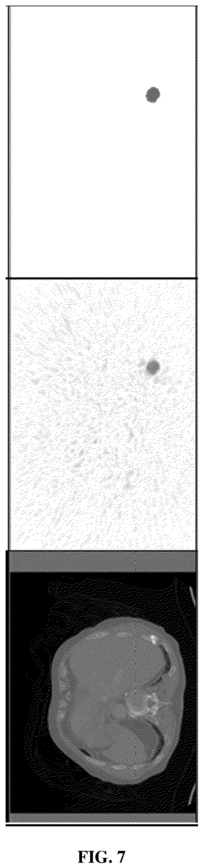

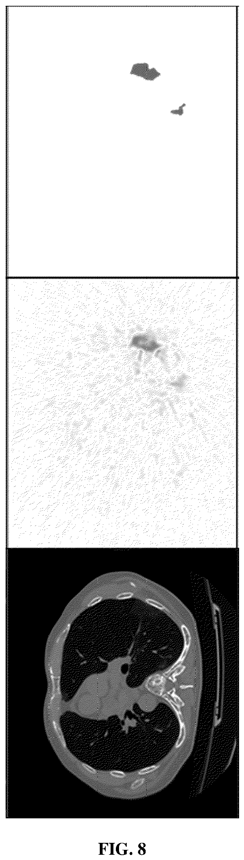

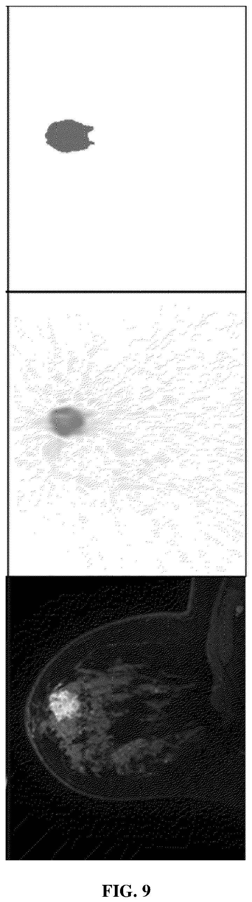

The device 6 comprises a reconstruction module 65 for the reconstruction of the region of interest (ROI), when detected. Notably, for each orientation of the plurality of stacks and 2D slice, the module 65 performs backprojection using said calculated second derivative and generates a tomographic reconstruction of the at least one region of interest. In one example, module 65 implements a filtered backprojection, which advantageously improves image quality by compensating for the streak artifacts associated with basic backprojection. Furthermore, a predefined threshold may be applied on the tomographic reconstruction in order to remove all regions from the reconstructed image that do not originate from the at least one region of interest and therefore obtain a segmented volume of the at least one region of interest. Advantageously, the reconstruction of the region of interest (ROI) may be performed only if the global level score indicates that the 3D image 51 comprises at least one region of interest (i.e., the global volume score is positive). Figure 6, 7, 8 and 9 provides some examples of the input images, the tomographic reconstruction (before thresholding) and the segmented volumes of the region(s) of interest.

The device 6 is interacting with a user interface 66, via which information can be entered and retrieved by a user. The user interface 66 includes any means appropriate for entering or retrieving data, information or instructions, notably visual, tactile and/or audio capacities that can encompass any or several of the following means as well known by a person skilled in the art: a screen, a keyboard, a trackball, a touchpad, a touchscreen, a loudspeaker, a voice recognition system.

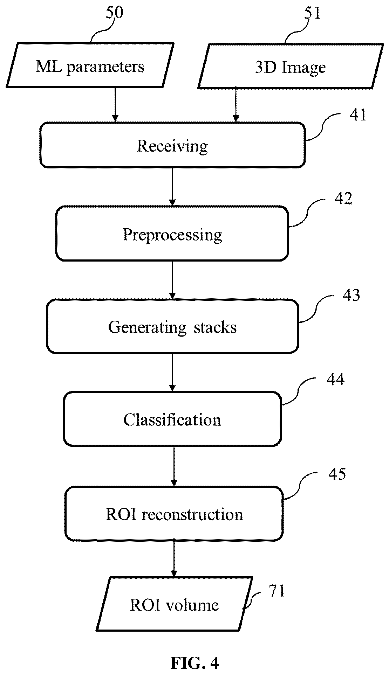

In its automatic actions, the device 1 may for example execute the following process **(Figure 4)**:

- receiving the image data 51 and the training parameters for the machine learning model (step 81),
- preprocessing the image data 51 (step 82),
- obtaining a plurality multi-oriented stacks of 2D slices from said 3D image 51 (step 83),
- feed each 2D slice into said trained machine learning model for detecting at least one region of interest in the 3D image of the subject (step 84),
- perform backprojection and generate a tomographic reconstruction of the at least one region of interest (step 85).

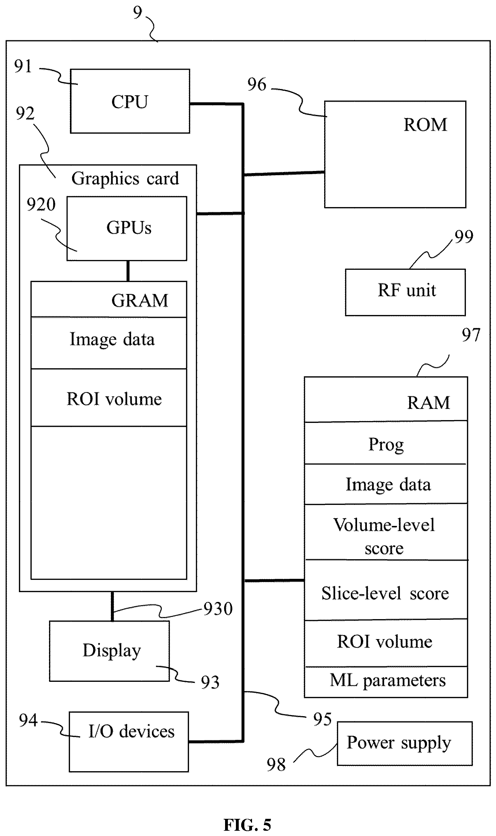

A particular apparatus 9, visible on Figure 5, is embodying the device 1 as well as the device 6 described above. It corresponds for example to a workstation, a laptop, a tablet, a smartphone, or a head-mounted display (HMD).

That apparatus 9 is suited to lesions detection and reconstruction and to related ML training. It comprises the following elements, connected to each other by a bus 95 of addresses and data that also transports a clock signal:

- a microprocessor 91 (or CPU);
- a graphics card 92 comprising several Graphical Processing Units (or GPUs) 920 and a Graphical Random Access Memory (GRAM) 921; the GPUs are quite suited to image processing, due to their highly parallel structure;
- a non-volatile memory of ROM type 96;
- a RAM 97;
- one or several I/O (Input/Output) devices 94 such as for example a keyboard, a mouse, a trackball, a webcam; other modes for introduction of commands such as for example vocal recognition are also possible;
- a power source 98; and
- a radiofrequency unit 99.

According to a variant, the power supply 98 is external to the apparatus 9.

The apparatus 9 also comprises a display device 93 of display screen type directly connected to the graphics card 92 to display synthesized images calculated and composed in the graphics card. The use of a dedicated bus to connect the display device 93 to the graphics card 92 offers the advantage of having much greater data transmission bitrates and thus reducing the latency time for the displaying of images composed by the graphics card. According to a variant, a display device is external to apparatus 9 and is connected thereto by a cable or wirelessly for transmitting the display signals. The apparatus 9, for example through the graphics card 92, comprises an interface for transmission or connection adapted to transmit a display signal to an external display means such as for example an LCD or plasma screen or a video-projector. In this respect, the RF unit 99 can be used for wireless transmissions.

It is noted that the word "register" used hereinafter in the description of memories 97 and 921 can designate in each of the memories mentioned, a memory zone of low capacity (some binary data) as well as a memory zone of large capacity (enabling a whole program to be stored or all or part of the data representative of data calculated or to be displayed). Also, the registers represented for the RAM 97 and the GRAM 921 can be arranged and constituted in any manner, and each of them does not necessarily correspond to adjacent memory locations and can be distributed otherwise (which covers notably the situation in which one register includes several smaller registers).

When switched-on, the microprocessor 91 loads and executes the instructions of the program contained in the RAM 97.

As will be understood by a skilled person, the presence of the graphics card 92 is not mandatory, and can be replaced with entire CPU processing and/or simpler visualization implementations.

In variant modes, the apparatus 9 may include only the functionalities of the device 6, and not the learning capacities of the device 1. In addition, the device 1 and/or the device 6 may be implemented differently than a standalone software, and an apparatus or set of apparatus comprising only parts of the apparatus 9 may be exploited through an API call or via a cloud interface.

## EXAMPLES

The present invention is further illustrated by the following examples.

Example 1: Mathematical formalization

We assume that we have a dataset of 3D images (volumes) with associated binary class labels $\{(V_1, y_i), ..., (V_N, y_n)\}$, [2] $\{(V_1, y_i), ..., (V_N, y_n)\}$, where $\forall i$, $V_i \in R^{d_i \times h_i \times w_i}$ and y; E $\{0,1\}$, where y = 1 designates the presence of an abnormality.

Our goal is to obtain a segmentation of the regions that distinguish the positive class from the negative class. For example, if the positive class consists of images of cancer patients and the negative class of images of healthy patients, our goal is to segment the tumours. Our method starts by training a 2D classification neural network $g_\theta$, with parameters $\theta$, to distinguish between 2D slices of positive volumes from slices of negative volumes.

In order to train $g_\theta$, we extract slices from the volumes and associate to each slice the ground truth label of the volume from which it came. We optimize $\theta$ to minimize the binary cross-entropy loss of each slice with respect to its assigned label.

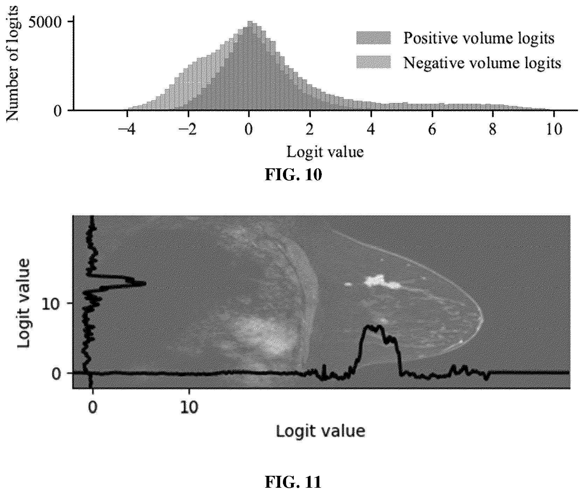

After training we observe Fig. 10 that the distributions of the logits produced by the neural network for slices coming from the positive class and negative class are different.

For most slices, the predicted logit is close to zero, which means that the classifier cannot tell whether the slice comes from a positive or negative volume. But some slices of the positive volumes are clearly identified as coming from the positive volumes. In the case of cancer, these would be slices that contain tumours.

When feeding each slice of a given volume to the classifier, we obtain a logit profile along the slice axis that can allow us to pinpoint the location of the discriminative regions (for example tumours) along this axis Fig. 11. If we repeat this process for different slice axes, we can narrow down the location in three dimensions. This process is called tomographic reconstruction, and its principal mathematical tool is the Radon transform. We propose to train the classifier with slices that can have any 3D orientation, and then, once it is trained, to apply the inverse Radon transform to the slice logits in order to obtain a 3D heatmap from which we can then extract a segmentation.

We start by introducing the Radon transform. Let f: $\mathbb{R}^3 \to \mathbb{R}$ be an infinitely differentiable function, and $\mathbb{S}^2$ the unit sphere of $\mathbb{R}^3$. For a unit vector $\hat{n} \in \mathbb{S}^2$ and $s \in \mathbb{R}$, let $\xi(s, \hat{n}) = \{x \in \mathbb{R}^3, x \cdot \hat{n} = s\}$ be the plane orthogonal to $\hat{n}$, containing the point $s\hat{n}$. We define the Radon transform of $f$ as the function

$$\mathcal{R}f: \mathbb{R} \times \mathbb{S}^2 \to \mathbb{R}$$

by equation (1)

$$\mathcal{R}f(s, \hat{n}) := \int_{x \in \xi(s, \hat{n})} f(x)\, dx$$

It can be shown that $f$ can be recovered from $\mathcal{R}f$ using the filtered backprojection formula (eq. 2):

$$f(\mathbf{x}) = c \int_{\widehat{\mathbf{n}} \in \mathbb{S}^2} \frac{\partial^2 \mathcal{R}f(s, \widehat{\mathbf{n}})}{\partial s^2} \langle \mathbf{x} \cdot \widehat{\mathbf{n}}, \widehat{\mathbf{n}} \rangle \, d\widehat{\mathbf{n}}$$

where c is a negative constant. For a function $\varphi \colon \mathbb{R} \times \mathbb{S}^2 \to \mathbb{R}$, we thus define equation 3:

$$\mathcal{R}^{-1}\varphi(\mathbf{x}) := c \int_{\widehat{\mathbf{n}} \in \mathbb{S}^2} \frac{\partial^2 \varphi(s, \widehat{\mathbf{n}})}{\partial s^2} \langle \mathbf{x} \cdot \widehat{\mathbf{n}}, \widehat{\mathbf{n}} \rangle \, d\widehat{\mathbf{n}}$$

It holds that for all $\hat{n}$, $\mathbf{x} \in \xi(\mathbf{x} \cdot \hat{n}, \hat{n})$. Thus, for a given x, this integral integrates the function $\partial^2 \varphi / \partial s^2$ over all planes containing the point x.

Now, let $V \colon [d] \times [h] \times [w] \to \mathbb{R}$ (where for an integer $n$, we define [n] = {0, 1, ..., n-1} be a discrete 3D volume, such as a medical image. The Radon transform cannot be directly applied to V, as V is not defined on $\mathbb{R}^3$. Let $\tilde{V} \colon \mathbb{R}^3 \to \mathbb{R}$ be an interpolation of $V$, such that $\tilde{V}(-1, -1, -1) = V(0,0,0)$ and $\tilde{V}(1,1,1) = V(d-1, h-1, w-1)$, and $\tilde{V}(x) = 0$ if $x \notin [-1, 1]^3$. $\tilde{V}(x)$ can be efficiently computed with the function grid_sample of PyTorch. The Radon transform of $\tilde{V}$ is well-defined, but not straightforward to compute numerically. We can approximate $\mathcal{R}\tilde{V}(s, \widehat{\mathbf{n}})$ by extracting a discrete 2D slice of $\tilde{V}$ and summing its pixels. For that, let **u** and **v** be two vectors orthogonal to $\hat{n}$. We define the slice $S_V(s, \widehat{\boldsymbol{n}}, \mathbf{u}, \mathbf{v}) \colon [h\_S] \times [w\_S] \to \mathbb{R}$ by equation 4

$$S_V(s, \widehat{\mathbf{n}}, \mathbf{u}, \mathbf{v})(i, j) = \tilde{V}(s\widehat{\mathbf{n}} + i'\mathbf{u} + j'\mathbf{v})$$

where $i' := 2\frac{i}{h_S - 1} - 1$ and $j' := \frac{j}{w_S - 1} - 1$ map integer coordinates $i$ and $j$ to the range [-1, 1]. $S_V(s, \hat{n}, \mathbf{u}, \mathbf{v})$ is a 2D image (that can be used as input for a neural network). It is the slice of $V$ which is oriented by **u** and **v**, whose normal vector is $\hat{n}$, and which contains the point $s\hat{n}$. This allows us to define the approximate Radon transform of $V$ as (eq. 5)

$$\mathcal{R}_\Sigma V(s, \widehat{\mathbf{n}}) := \frac{1}{h_S w_S} \sum_{i=0}^{h_S - 1} \sum_{j=0}^{w_S - 1} S_V(s, \widehat{\mathbf{n}}, \widehat{\mathbf{u}}(\widehat{\mathbf{n}}), \widehat{\mathbf{v}}(\widehat{\mathbf{n}}))(i, j)$$

where $\hat{u}(\hat{n})$ and $\hat{v}(\hat{n})$ are two unit vectors such that $(\hat{u}, \hat{u}(\hat{n}), \hat{v}(\hat{n}))$ is an orthonormal basis (otherwise, shear and scaling would be introduced in the slice). The idea of this work is to replace the sum of equation 5 with our trained 2D classifier before applying the inverse Radon transform. We define (eq. 6)

$$\mathcal{R}_{g_\theta} V(s, \widehat{\mathbf{n}}) := g_\theta(S_V(s, \widehat{\mathbf{n}}, \widehat{\mathbf{u}}(\widehat{\mathbf{n}}), \widehat{\mathbf{v}}(\widehat{\mathbf{n}})))$$

The output of our method is a 3D volume $H \colon [D] \times [H] \times [W] \to \mathbb{R}$ (in practice, to facilitate evaluation, we set $D = d$, $H = h$ and $W = w$) such that (ep. 7)

$$H(i, j, k) \approx \mathcal{R}^{-1}(\mathcal{R}_{g_\theta} V)(i', j', k')$$

Where $i' = 2\frac{i}{D-1} - 1, \quad j' = 2\frac{j}{H-1} - 1$ and $k' = 2\frac{k}{W-1} - 1$ maps integer coordinates to the range [-1, 1]. The integral over $\widehat{\boldsymbol{n}} \in \mathbb{S}^2$ of equation 3 can be approximated by a sum over a set of L unit vectors that are evenly distributed over the unit sphere $\mathbb{S}^2$. To get such a set of unit vectors, we use the Fibonacci lattice: for $l \in [L]$, let

$$y_l = 2\frac{l}{L-1} - 1 \in [-1,1], \; r_l = \sqrt{1 - y_l^2},$$ $\theta_l = l\alpha$ where $\alpha = \pi(3 - \sqrt{5})$ is the golden angle, $x_l = r_l \cos\theta_l$ and $z_l = r_l \sin\theta_l$. We then set $\hat{\boldsymbol{n}}_l = (x_l, y_l, z_l)$. We have

$$\mathcal{R}^{-1}(\mathcal{R}_{g_\theta} V)(i', j', k')$$

$$\approx \frac{c|\mathbb{S}^2|}{L} \sum_{l=0}^{L-1} \frac{\partial^2 \mathcal{R}_{g_\theta} V(s, \widehat{\mathbf{n}}_\ell)}{\partial s^2} \left( \left( \begin{smallmatrix} i' \\ j' \\ k' \end{smallmatrix} \right) \cdot \widehat{\mathbf{n}}_\ell, \widehat{\mathbf{n}}_\ell \right)$$

where $|\mathbb{S}^2|$ is the area of the unit sphere. It remains to estimate the quantity

$$\partial^2 \mathcal{R}_{g_\theta} V(s, \widehat{\boldsymbol{n}}_l) / \partial s^2.$$

In order to do that, for a fixed unit vector $\hat{\boldsymbol{n}}_l$, we sample the function

$$s \mapsto \mathcal{R}_{g_\theta} V(s, \widehat{\boldsymbol{n}}_l)$$

at $K+2$ regular intervals $s_k = 2\frac{k}{K-1}, k \in \{-1, 0, ..., K\}$. Letting

$$y_k(\widehat{\boldsymbol{n}}_l) = \mathcal{R}_{g_\theta} V(s_k, \widehat{\boldsymbol{n}}_l)$$

for $k \in \{-1, 0, ..., K\}$, we use finite differences to estimate the second derivative, defining, for $k \in \{0, ..., K-1\}$ (eq. 9)

$$z_k(\widehat{\mathbf{n}}_\ell) = \frac{y_{k+1}(\widehat{\mathbf{n}}_\ell) + y_{k-1}(\widehat{\mathbf{n}}_\ell) - 2y_k(\widehat{\mathbf{n}}_\ell)}{1/(K-1)}$$

so that

$$z_k(\widehat{\mathbf{n}}_\ell) \approx \frac{\partial^2 \mathcal{R}_{g_\theta} V(s, \widehat{\mathbf{n}}_\ell)}{\partial s^2}(s_k, \widehat{\mathbf{n}}_\ell)$$

Now, let $s \mapsto \check{z}(s, \hat{\boldsymbol{n}}_l)$ be an interpolation of $z \mapsto z_k(\hat{\boldsymbol{n}}_l)$, such that $\check{z}(-1, \hat{\boldsymbol{n}}_l) = z_0(\hat{\boldsymbol{n}}_l), \check{z}(1, \hat{\boldsymbol{n}}_l) = z_{K-1}(\hat{\boldsymbol{n}}_l)$ and $\check{z}(s, \hat{\boldsymbol{n}}_l) = 0$ for $s \notin [-1,1]$ (which again, can be efficiently computed using the function grid_sample of PyTorch).
We finally define equation 11

$$H(i,j,k) := \frac{c|\mathbb{S}^2|}{L} \sum_{l=0}^{L-1} \tilde{z}\left(\begin{pmatrix} i' \\ j' \\ k' \end{pmatrix} \cdot \hat{\mathbf{n}}_\ell, \hat{\mathbf{n}}_\ell\right)$$

$$\approx \mathcal{R}^{-1}(\mathcal{R}_{g_\theta} V)(i', j', k')$$

We verify that our implementation is corrected by substituting

$$\mathcal{R}_{g_\theta}$$

by $\mathcal{R}_\Sigma$ (eq. 5) and checking that H ≈ V.

Note that $|(i'\, j'\, k') \cdot \hat{n}|$ can be greater than 1 (up to $\sqrt{3}$), although the approximation of equation 10 was computed only for s in the range [-1, 1], so that $\tilde{z}(s, \hat{n}_l)$ is zero outside this range. This has the effect of neglecting the reconstruction of the corners of the image, which we find beneficial because it concentrates the efforts on reconstructing the center, which almost always contains all regions of interest.

Also note that we have not explicited how we choose $\hat{u}(\hat{n}_l)$ and $\hat{v}(\hat{n}_l)$. For each normal vector $\hat{n}_l$, we randomly choose them in $\hat{n}_l^\perp$ (such that they are perpendicular to each other). H is a priori dependent on their choice, but we find that in practice, this is not the case because (1) after training, the rotation invariance of $g_\theta$ is high because they are also chosen randomly during training and (2) L is high in our experiments, we chose L > 1000.

**Example 2: Experiments**

Datasets: Four different datasets were used to provide different examples of implementation of the present method. Each dataset was split into a training and validation set at the patient level.

**Multiple sclerosis (MS) (brain MRI)**

For this example, it was used a large private dataset consisting of 9113 studies from the ADVANCE clinical trial (Peter A Calabresi, et al. and ADVANCE Study Investigators. Pegylated interferon β-1a for relapsing-remitting multiple sclerosis (ADVANCE): a randomized, phase 3, double-blind study. Lancet Neurol, 13 (7):657-665, 2014) and ASCEND clinical trial (Raju Kapoor et al. and ASCEND investigators. Effect of natalizumab on disease progression in secondary progressive multiple sclerosis (ASCEND): a phase 3, randomized, double-blind, placebo controlled trial with an openlabel extension. Lancet Neurol., 17(5):405-415, 2018). The dataset was splitted into a training and validation set at the patient level. Each study includes T1, proton density, T2, post-gadolinium FLAIR and T1 weighted sequences, which were all rigidly registered to a common atlas and cropped. The resulting image shape is 54 × 222 × 179. For a given study, all 5 sequences were stacked along the channel axis to be input to the models, and apply channel wise z-normalization. The goal was to segment gadolinium enhancing lesions. These lesions are hyperintense on the post-gadolinium injection T1 weighted scan, because they take-up gadolinium. This abnormal gadolinium uptake is due to bloodbrain barrier breakdown and is a sign of active multiple sclerosis inflammation. A ground truth segmentation mask was derived by consensus of two trained experts as part of the clinical trials. A sample was considered positive if its ground truth segmentation was non-empty, otherwise it was considered negative.

**AutoPET-II (whole body PET-CT)**

For this example, it was used a public dataset (Sergios Gatidis and Thomas Kuestner. A whole-body FDGPET/CT dataset with manually annotated tumor lesions, 2022.) consisting of FDG-PET/CT pairs. The objective of this exam is to detect FDG-avid tumours. Ground truth manual segmentation masks are provided for each study (which are empty for negative studies). In order to increase training speed, we cropped all images according to the following protocol: a binary mask was generated by thresholding the SUV volume (Standardized Uptake Value, which is obtained from the PET volume by dividing it by a patient-dependent constant) at 0.2. The minimum enclosing bounding box was used to crop the image. The CT scan was then resampled onto this cropped image. The CT and SUV images were stacked along the channel axis. The CT scan was divided by 1000 and the SUV by 10 to be input to the models. A sample was considered positive if its ground truth segmentation was non-empty, otherwise it was considered negative.

# EP 4 546 255 A1

**Duke breast cancer MRI**

In this example, it was used the public dataset (Ashirbani Saha, et al. A machine learning approach to radiogenomics of breast cancer: a study of 922 subjects and 529 DCE-MRI features. British Journal of Cancer, 119(4):508-516, 2018) consisting of breast MRIs of 922 biopsy-confirmed invasive breast cancer patients. Each study comprises 6 different acquisitions: a T1-sequence, a fat-saturated pre-contrast T1 sequence, and 4 post-contrast T1 sequences. Trained experts provided bounding boxes delimiting the tumours. There is exactly one bounding-box per patient (in the case of multiple tumours, only one was annotated). In order to obtain negative volumes, the left and right breasts were separated into two different images. The breast with bounding box was considered positive. The other breast was considered negative, unless the field "Contralateral Breast Involvement" was marked as positive in the clinical data, in which case the other breast was also considered positive. In this work, the pre-contrast and first postcontrast sequences were only use, as these were used by the annotators to draw the bounding boxes. These sequences were stacked along the channel axis and apply channelwise z-normalization.

**MosMedData Covid-19 (thoracic CT)**

In this example, it was used public dataset (Sergey P Morozov, et al. Mosmeddata: Chest ct scans with covid-19 related findings dataset. arXiv preprint arXiv:2005.06465, 2020.) consists of 1110 studies of thoracic CT scans. There are 6 classes, named CT-0 to CT-6. CT-0 is the negative class, meaning that no signs of Covid-19 were identified in the scans, and CT-1 to 6 were the positive class and were sorted by increasing order of severity. CT-0 and CT-1 were used only. The axial resolution of the CT scans was low, as only every tenth slice was kept in the public dataset. The slices have shape 512 $\times$ 512. Ground truth manual segmentation masks were available for 50 cases. These masks were preprocessed in order to reduce their number of connected components by applying a binary closing with a sphere of radius 20 followed by a binary opening with a sphere of radius 10. The volumes were divided by 1000 at the input of the models.

**Claims**

1. A device (1) for training a machine learning model for detecting the presence of at least one region of interest in a 3D image of a subject; said device comprising:

   - at least one input configured to receive a first set of 3D images acquired from a first cohort of subject (21) and a second set of 3D images acquired from a second cohort of subject (22), wherein the 3D images of said first set differs from the 3D images of said second set for the presence of said at least one region of interest;
   - at least one processor configured to:

     ○ for each received 3D image of the first cohort and the second cohort, generate at least two stacks of 2D slices, so that the orientation of the slices in each stack is different from the orientation of the slices in another stack of said at least two stacks;
     ○ generate a training dataset comprising said stacks of 2D slices;
     ○ train said machine learning model using said generated training dataset so to obtain training parameters, said machine learning model being configured to receive as input a 2D slice and provide as output a slice-level prediction score representing a probability that said input 2D slice comprises at least one region of interest, said slice-level prediction score being used to compute and optimize a loss function during said training so to optimize the discrimination between the 2D slices comprising said at least one region from the 2D slices comprising no region of interest;

   - at least one output configured to provide said training parameters for the trained machine learning model.

2. The device (1) according to claim **1**, wherein said machine learning model is a 2D deep neural network, preferably without batch normalization layers.

3. The device (1) according to either one of claims **1** or **2**, wherein the region of interest is a lesion present in the subjects of the first cohort and absent in the subjects of the second cohort.

4. The device (1) according to any one of claim **1** to **3**, wherein generating the training dataset comprises generating a plurality of training samples, each training sample comprising a stack of 2D slices and at least one label, said label representing an absence or a present of at least one region of interest in the 3D image from which the stack of 2D slices is obtained.

5. The device (1) according to claim **4**, wherein the training is a weakly supervised training.

6. A computer-implemented method for training a machine learning model for detecting the presence of at least one region of interest in a 3D image of a subject; said method comprising:

- receive a first set of 3D images acquired from a first cohort of subject (21) and a second set of 3D images acquired from a second cohort of subject (22), wherein the 3D images of said first set differs from the 3D images of said second set for the presence of said at least one region of interest;
- for each received 3D image of the first cohort and the second cohort, generate at least two stacks of 2D slices, so that the orientation of the slices in each stack is different from the orientation of the slices in another stack of said at least two stacks;
- generate a training dataset comprising said stacks of 2D slices;
- train said machine learning model using said generated training dataset so to obtain training parameters, said machine learning model being configured to receive as input a 2D slice and provide as output a slice-level prediction score representing a probability that said input 2D slice comprises at least one region of interest, said slice-level prediction score being used to compute and optimize a loss function during said training so to optimize the discrimination between the 2D slices comprising said at least one region from the 2D slices comprising no region of interest;
- at least one output configured to provide said training parameters for the trained machine learning model.

7. A device (6) for detecting and reconstructing at least one region of interest in a 3D image of a subject (51) using a trained machine learning model obtained with the method for training according to claim **6**; wherein said device comprises:

- at least one input configured to receive a 3D image of a subject (51);
- at least one processor configured to:

  ∘ obtain a plurality of stacks of 2D slices from said 3D image (51), wherein the orientation of the 2D slices in one stack is different from the orientation of the 2D slices in another stack of the plurality of stacks;
  ∘ for each obtained stack:

    • feed each 2D slice into said trained machine learning model for detecting at least one region of interest in the 3D image of the subject, obtaining slice-level prediction scores for each 2D slice; wherein the slice-level prediction score represents a probability that said input 2D slice comprises at least one portion of said region of interest,
    • calculate the second derivative of the slice-level prediction scores along the orientation axis of the stack;

  ∘ for each orientation of the plurality of stacks and 2D slice, perform backprojection using said calculated second derivative and generate a tomographic reconstruction of the at least one region of interest,

- at least one output providing said tomographic reconstruction of at least one region of interest (71) present in a 3D image of a subject.

8. The device according to claim **7**, wherein the at least one processor is further configured to apply a threshold on the tomographic reconstruction to obtain a segmentation of the at least one region of interest.

9. The device according to claim **7** or **8**, wherein the at least one processor is further configured to calculate a volume-level score by taking the maximum over the slice-level scores calculated for each stack.

10. A computer-implemented method for detecting and reconstructing at least one region of interest in a 3D image of a subject (51) using a trained machine learning model obtained with the method according to claim **6**; wherein said method comprises:

- receiving a 3D image of a subject (51);
- obtain a plurality of stacks of 2D slices from said 3D image (51), wherein the orientation of the 2D slices in one stack is different from the orientation of the 2D slices in another stack of the plurality of stacks;
- for each obtained stack:

 • feed each 2D slice into said trained machine learning model for detecting at least one region of interest in the 3D image of the subject, obtaining slice-level prediction scores for each 2D slice; wherein the slice-level prediction score represents a probability that said input 2D slice comprises at least one portion of said region of interest,
 • calculate the second derivative of the slice-level prediction scores along the orientation axis of the stack;

- for each orientation of the plurality of stacks and 2D slice, perform backprojection using said calculated second derivative and generate a tomographic reconstruction of the at least one region of interest,
- at least one output providing said tomographic reconstruction of at least one region of interest (71) present in a 3D image of a subject.

11. A computer program product comprising instructions which, when the program is executed by a computer, cause the computer to carry out the method for training of claim **6** and the method for detecting and reconstructing of claim **10**.

12. A computer-readable storage medium comprising instructions which, when executed by a computer, cause the computer to carry out the method for training of claim **6** and the method for detecting and reconstructing of claim **10**.

**FIG. 1**

FIG. 2

FIG. 3

FIG. 4

**FIG. 5**

**FIG. 6**

**FIG. 7**

**FIG. 8**

**FIG. 9**

**FIG. 10**

**FIG. 11**

Europäisches
Patentamt

European
Patent Office

Office européen
des brevets

# EUROPEAN SEARCH REPORT

**Application Number**

EP 23 30 6860

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BAKHTIAR AMALUDIN ET AL: "Toward more accurate diagnosis of multiple sclerosis: Automated lesion segmentation in brain magnetic resonance image using modified U-Net model", INTERNATIONAL JOURNAL OF IMAGING SYSTEMS AND TECHNOLOGY, WILEY AND SONS, NEW YORK, US, vol. 34, no. 1, 28 July 2023 (2023-07-28), page n/a, XP072576349, ISSN: 0899-9457, DOI: 10.1002/IMA.22941 | 1-4,6 | INV. G06T7/00 G06T7/11 |
| Y | * abstract * | 2,5 | |
| A | * section3, 4 * * figures 1, 3, 6 * | 7-12 | |
| X | PAWAR KAMLESH ET AL: "Orthogonal-Nets: A Large Ensemble of 2D Neural Networks for 3D Brain Tumor Segmentation", 15 July 2022 (2022-07-15), 20220715, PAGE(S) 54 - 67, XP047628628, [retrieved on 2022-07-15] | 1-4,6 | |
| Y | * abstract * | 5 | TECHNICAL FIELDS SEARCHED (IPC) |
| A | * section 2 * * figures 1, 2 * | 7-12 | G06T |
| Y | HERTEL ROBERT RHERTEL@LAKEHEADU CA ET AL: "Deep Learning Techniques for COVID-19 Diagnosis and Prognosis Based on Radiological Imaging", ARXIV.ORG, CORNELL UNIVERSITY LIBRARY, 201 OLIN LIBRARY CORNELL UNIVERSITY ITHACA, NY 14853, vol. 55, no. 12, 2 March 2023 (2023-03-02), pages 1-39, XP058982817, DOI: 10.1145/3576898 * abstract * * page 12 * * page 19 * | 2,5 | |

The present search report has been drawn up for all claims

| Place of search | Date of completion of the search | Examiner |
|---|---|---|
| Munich | 28 March 2024 | Katartzis, Antonios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PETER A CALABRESI et al.** ADVANCE Study Investigators. Pegylated interferon β-1a for relapsing-remitting multiple sclerosis (ADVANCE): a randomized, phase 3, double-blind study. *Lancet Neurol*, 2014, vol. 13 (7), 657-665
- **RAJU KAPOOR et al.** ASCEND investigators. Effect of natalizumab on disease progression in secondary progressive multiple sclerosis (ASCEND): a phase 3, randomized, double-blind, placebo controlled trial with an openlabel extension. *Lancet Neurol.*, 2018, vol. 17 (5), 405-415

- **ASHIRBANI SAHA et al.** A machine learning approach to radiogenomics of breast cancer: a study of 922 subjects and 529 DCE-MRI features. *British Journal of Cancer*, 2018, vol. 119 (4), 508-516
- **SERGEY P MOROZOV et al.** Mosmeddata: Chest ct scans with covid-19 related findings dataset. *arXiv:2005.06465*, 2020